# EUROPEAN PATENT SPECIFICATION

(11) **EP 2 385 681 B1**
(45) Date of publication and mention of the grant of the patent: **13.07.2016**
(21) Application number: 10162305.6
(22) Date of filing: 07.05.2010
(51) Int. Cl.: H04W 4/16, H04L 29/08, H04W 76/02

(54) **Triggering a data transfer to a mobile terminal device with a voice call**
Auslösung einer Datenübertragung zu einer mobilen Endgerätvorrichtung mit einem Sprachanruf
Déclenchement d'une transmission de donnés à un dispositif de terminal mobile avec un appel vocal

(43) Date of publication of application: 09.11.2011
(73) Proprietor: Telia Company AB, 106 63 Stockholm (SE)
(72) Inventor: Laukkanen, Mikko, 02630, Espoo (FI); Suikkanen, Jukka, 02320, Espoo (FI); Paananen, Jorma, 00100, Helsinki (FI); Jurvanen, Tuukka, 90520, Oulu (FI); Jernberg, Juha, 90550, Oulu (FI); Welin, Olli, 02360, Espoo (FI)
(74) Representative: Papula Oy

(56) References cited:
- WO-A2-2007/141607
- US-A1- 2002 128 036
- US-A1- 2005 144 236
- US-A1- 2007 173 237
- US-A1- 2007 207 795

## Description

### BACKGROUND OF THE INVENTION:

### Field of the Invention:

The invention relates generally to mobile telecommunications. In particular, the invention relates to methods, computer programs and mobile terminal devices for triggering a packet data transfer to a mobile terminal device with a voice call.

### Description of the Related Art:

Today, various mobile services have a need to push data into mobile terminal devices of the subscribers. Such a service is for instance a loyalty program that needs to send offerings or product information to subscribers who are members in a loyalty program.

However, mobile telephone networks typically do not allow initiation of a data connection (such as a general packet radio service (GPRS) based connection) from the network to the mobile terminal device. Furthermore, the service may not know a destination address for the data connection, i.e. the data connection address of the mobile terminal device.

To solve this problem, prior art has introduced triggering the mobile terminal device to initiate the data connection with a short message service (SMS) message.

However, this prior art solution has several significant disadvantages, such as: short message service does not provide a real-time connection, short message service is unreliable, the sender has no real connection all the way into the mobile terminal device to be sure that the information is delivered, short message service induces costs, and short message service may not work globally.

Prior art further includes WO 2007/141607 A2 which discloses using a SIM-based firewall to filter and regulate events that may occur in a wireless device or SIM card. The method may include detecting an event; determining whether the event matches criteria for allowance; and, if the event matches, allowing the event. If the event is not allowed, the method may then comprise terminating the event; determining whether to notify the external interface; and potentially transmitting an indication to the external interface.

Prior art further includes US 2007/173237 A1 which discloses enhancing voice calls. In some examples, the system receives a dialed number from a user associated with a voice call, determines that the voice call is associated with a party capable of providing data services to the user, and provides data services to the user. In some cases, the system provides the data services to the user during the voice call. In some cases, the system provides the data services to the user in lieu of the voice call.

Prior art further includes US 2002/128036 A1 which discloses integrating voice and data operations into a single mobile device capable of simultaneously performing data and voice actions. The mobile device works in a network capable of exchanging both cell phone calls and data items to the mobile device. By wearing an earphone or an ear-bud device the user is capable of dealing with voice conversations while working with data centric information related to the current caller.

Prior art further includes US 2005/144236 A1 which discloses a communication arrangement that includes a Short Message Service Center (SMS-SC), a permissions facility (such as a customer care facility) to associate permissions and service requests, and a network element configured to receive a Short Message Service message via the SMS-SC. The network element extracts a device identifier from the message, applies the device identifier to locate device status information, and interacts with the facility to determine permissions to apply to service requests originating from the device.

Prior art further includes US 2007/207795 A1 which discloses performing interactive services at a mobile device. In some cases, the system receives an indication of an event, and provides interactive services to a user of the mobile device based on the event.

Therefore, an object of the present invention is to alleviate the problems described above and to introduce a solution that allows triggering a packet data transfer to a mobile terminal device with a voice call instead of short message service.

### SUMMARY OF THE INVENTION:

A first aspect of the present invention is a method of triggering a packet data transfer to a mobile terminal device with a voice call. An incoming voice call is detected at a mobile telephony enabled mobile terminal device. A calling subscriber identification of the detected incoming voice call is determined. The determined calling subscriber identification is searched from among one or more subscriber identifications allowed to trigger a packet data transfer to the mobile terminal device and pre-stored in a universal integrated circuit card arranged in connection with the mobile terminal device. In response to finding the determined calling subscriber identification among the one or more pre-stored subscriber identifications, a wireless packet data connection is initiated from the mobile terminal device to a predetermined packet data network address.

A second aspect of the present invention is a mobile terminal device. The mobile terminal device is mobile telephony enabled, and it comprises a voice call detector that is configured to detect an incoming voice call. The mobile terminal device further comprises a calling subscriber identification determination unit that is configured to determine a calling subscriber identification of the detected incoming voice call. The mobile terminal device further comprises a subscriber identification storage that is configured to store one or more subscriber identifications allowed to trigger a packet data transfer to the mobile terminal device, which subscriber identification storage is comprised in a universal integrated circuit card arranged in connection with the mobile terminal device. The mobile terminal device further comprises a calling subscriber identification search unit that is configured to search for the determined calling subscriber identification at the subscriber identification storage comprised in the universal integrated circuit card. The mobile terminal device further comprises a packet data transfer initiator that is configured to initiate a wireless packet data connection to a predetermined packet data network address in response to the determined calling subscriber identification being found in the subscriber identification storage.

A third aspect of the present invention is a computer program for triggering a packet data transfer to a mobile terminal device with a voice call. The computer program comprises instructions which, when run in a mobile telephony enabled mobile terminal device, cause the mobile terminal device to perform the steps of:
detecting an incoming voice call at a mobile telephony enabled mobile terminal device;
determining a calling subscriber identification of the detected incoming voice call;
searching for the determined calling subscriber identification from among one or more subscriber identifications allowed to trigger a packet data transfer to the mobile terminal device and pre-stored in a universal integrated circuit card arranged in connection with the mobile terminal device; and
in response to finding the determined calling subscriber identification among the one or more pre-stored subscriber identifications:
   initiating a wireless packet data connection from the mobile terminal device to a predetermined packet data network address.

A fourth aspect of the present invention is a mobile terminal device. The mobile terminal device is mobile telephony enabled, and it comprises a voice call detecting means for detecting an incoming voice call. The mobile terminal device further comprises a calling subscriber identification determining means for determining a calling subscriber identification of the detected incoming voice call. The mobile terminal device further comprises a subscriber identification storing means for storing one or more subscriber identifications allowed to trigger a packet data transfer to the mobile terminal device, which subscriber identification storing means is comprised in a universal integrated circuit card arranged in connection with the mobile terminal device. The mobile terminal device further comprises a calling subscriber identification searching means for searching for the determined calling subscriber identification at the subscriber identification storing means comprised in the universal integrated circuit card. The mobile terminal device further comprises a packet data transfer initiating means for initiating a wireless packet data connection to a predetermined packet data network address in response to the determined calling subscriber identification being found in the subscriber identification storage.

In an embodiment of the invention, the detected incoming voice call is discarded in response to finding the determined calling subscriber identification among the one or more pre-stored subscriber identifications.

In an embodiment of the invention, packet data associated with the predetermined packet data network address is retrieved to the mobile terminal device via the initiated wireless packet data connection.

In an embodiment of the invention, the discarding the detected incoming voice call comprises automatically hanging up said voice call without answering or ringing.

In an embodiment of the invention, the detected incoming voice call comprises an incoming voice call originating from a network server.

In an embodiment of the invention, the predetermined packet data network address to which the wireless packet data connection is initiated comprises a predetermined packet data network address associated with the determined calling subscriber identification.

It is to be understood that the aspects and embodiments of the invention described above may be used in any combination with each other. Several of the aspects and embodiments may be combined together to form a further embodiment of the invention. A method, a mobile terminal device, or a computer program which is an aspect of the invention may comprise at least one of the embodiments of the invention described above.

The invention allows triggering a packet data transfer to a mobile terminal device with a voice call, thereby enabling push data services to mobile terminal devices that are more reliable and efficient than prior art solutions. Furthermore, since the invention allows automatically hanging up the incoming voice call without answering it or ringing, the invention induces less costs than e.g. the short message service based prior art solutions.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
**F**ig. **1** is a flow diagram illustrating a method according to an embodiment of the invention, and

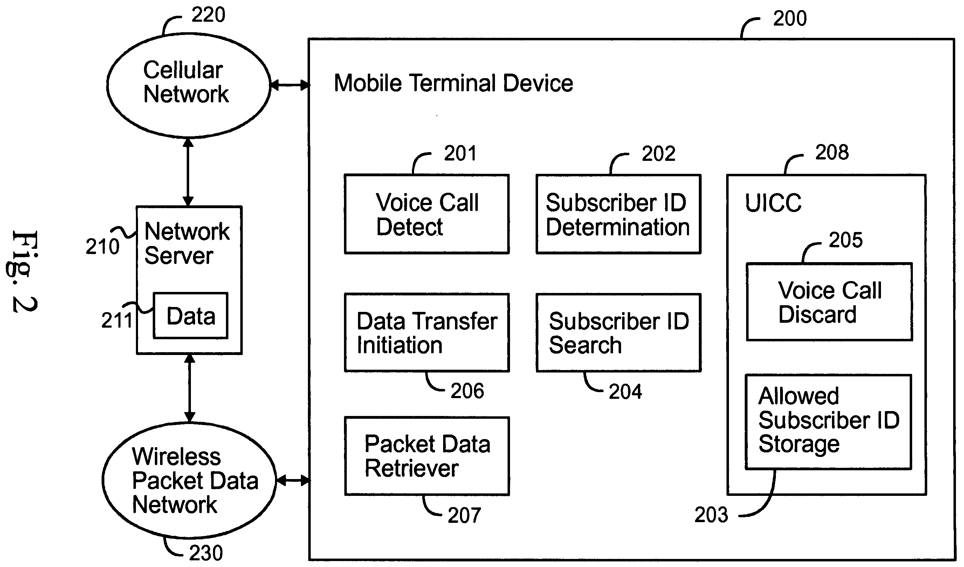

**Fig. 2** is a block diagram illustrating a mobile terminal device according to an embodiment of the invention as deployed in connection with various communications networks.

### DETAILED DESCRIPTION OF THE PREFERRED EMBODIMENTS:

Reference will now be made in detail to the embodiments of the invention, examples of which are illustrated in the accompanying drawings.

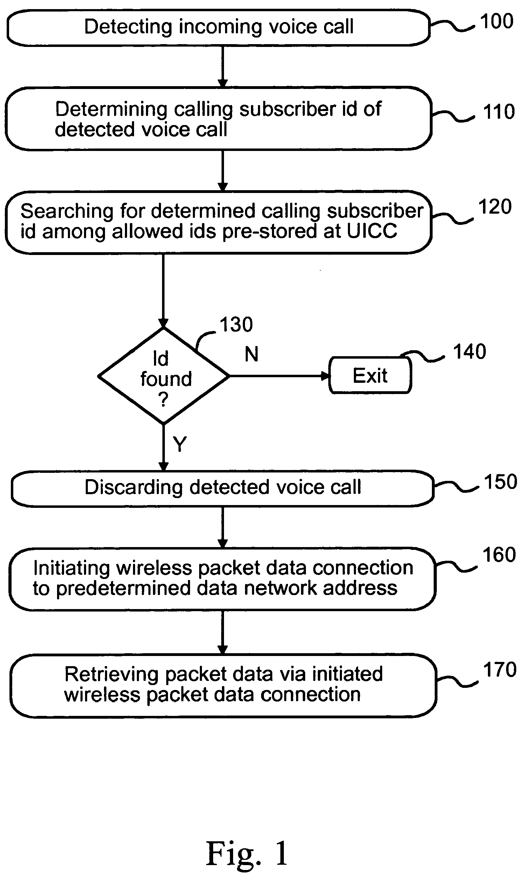

Figure 1 is a flow diagram illustrating a method of triggering a packet data transfer to a mobile terminal device with a voice call according to an embodiment of the invention.

At step 100, an incoming voice call is detected at a mobile telephony enabled mobile terminal device. The detected incoming voice call may originate e.g. from a network server. A calling subscriber identification of the detected incoming voice call is determined, step 110.

At step 120, the determined calling subscriber identification is searched from one or more pre-stored subscriber identifications allowed to trigger a packet data transfer to the mobile terminal device. The subscriber identifications allowed to trigger the packet data transfer have been pre-stored in a universal integrated circuit card that has been arranged in connection with the mobile terminal device.

If the determined calling subscriber identification is not found among the one or more pre-stored subscriber identifications at step 130, the method of Figure 1 exits, step 140.

If the determined calling subscriber identification is found among the one or more pre-stored subscriber identifications at step 130, the method of Figure 1 may proceed to optional step 150, in which the detected incoming voice call is discarded e.g. by automatically hanging it up without answering or ringing.

After the optional step 150 or instead of it, the method of Figure 1 proceeds to step 160, in which a wireless packet data connection is initiated from the mobile terminal device to a predetermined packet data network address. The predetermined packet data network address may comprise e.g. a predetermined packet data network address associated with the determined calling subscriber identification.

At step 170, packet data associated with the predetermined packet data network address is retrieved to the mobile terminal device via the initiated wireless packet data connection.

Figure 2 is a block diagram illustrating a mobile terminal device 200 according to an embodiment of the invention as deployed in connection with various communications networks.

The arrangement of Figure 2 comprises a cellular network 220 which may be e.g. a Global System for Mobile Communications (GSM) network, a 3rd Generation Partnership Project (3GPP), and/or a code division multiple access (CDMA) based network including wideband code division multiple access (W-CDMA) based networks and international mobile telecommunications-2000 (IMT-2000) based networks.

The arrangement of Figure 2 further comprises a wireless packet data network 230 which may be e.g. general packet radio service (GPRS) enabled network or a wireless local area network (WLAN) enabled network. Even though Figure 2 depicts the cellular network 220 and the wireless packet data network 230 as separate entities, they may alternatively be integrated with each other at least in part, as is known to those skilled in the art.

The arrangement of Figure 2 further comprises a network server 210. Herein, the term "network server" is used to refer to a network element that provides one or more services that have a need to push data into mobile terminal devices. Such a service is for instance a loyalty program that needs to send offerings or product information to the loyalty program members. The data to be pushed 211 may be arranged in the network server 210, as depicted in Figure 2. Alternatively or in addition, at least some of the data to be pushed 211 may be arranged e.g. in a data base that is separate from the network server 210 but communicatively connected to the network server 210.

The mobile terminal device 200 is mobile telephony enabled. The mobile terminal device 200 may be e.g. a mobile telephone or a mobile telephony enabled laptop computer, such as a GSM/3GPP -enabled laptop computer. The mobile terminal device 200 comprises a universal integrated circuit card (UICC) 208. As is known to those skilled in the art, the term "UICC" refers to the smart card used in mobile terminal devices in e.g. GSM and 3GPP networks. In a GSM network, the UICC typically contains a SIM (subscriber identity module) application and in a UMTS network it may contain a USIM application. In a CDMA network, the UICC may contain a CSIM application. In addition, the UICC may provide storage for a phone book and other applications.

The mobile terminal device 200 comprises a voice call detector 201 that is configured to detect an incoming voice call. The incoming voice call may be originating from e.g. the network server 210. The mobile terminal device 200 further comprises a calling subscriber identification determination unit 202 that is configured to determine a calling subscriber identification of the detected incoming voice call.

The mobile terminal device 200 further comprises a subscriber identification storage 203 that is configured to store one or more subscriber identifications allowed to trigger a packet data transfer to the mobile terminal device 203. These subscriber identifications may be e.g. mobile subscriber integrated services digital network numbers (MSISDN). As depicted in Figure 2, the subscriber identification storage 203 is arranged in the UICC 208. The subscriber identification storage 203 may include e.g. a table or a data base.

The mobile terminal device 200 further comprises a calling subscriber identification search unit 204 that is configured to search for the determined calling subscriber identification at the subscriber identification storage 203 arranged in the UICC 208. The mobile terminal device 200 further comprises a packet data transfer initiator 206 that is configured to initiate a wireless packet data connection to a predetermined packet data network address in response to the determined calling subscriber identification being found in the subscriber identification storage 206. The predetermined packet data network address may be associated with e.g. the determined calling subscriber identification. The packet data transfer initiator 206 may be arranged to be executed e.g. on a host processor (not shown in Figure 2) of the mobile terminal device 200. Furthermore, the packet data transfer initiator 206 may be implemented e.g. as a Java midlet program. The initiated wireless packet data connection may comprise e.g. a secure hypertext transfer protocol (HTTPS) connection over e.g. GPRS or WLAN.

The mobile terminal device 200 may further comprise an optional voice call discard unit 205 that is configured to discard the detected incoming voice call e.g. by automatically hanging up said voice call without answering or ringing in response to the determined calling subscriber identification being found in the subscriber identification storage 203. The voice call discard unit 205 may be arranged to be executed e.g. on the UICC 208. The mobile terminal device 200 further comprises a packet data retriever 207 that is configured to retrieve packet data 211 associated with the predetermined packet data network address via the initiated wireless packet data connection. As detailed above, the retrieved packet data 211 comprises the data that needs to be pushed by one or more services, such as e.g. offerings or product information pushed to the members of loyalty program.

The exemplary embodiments can include, for example, any suitable servers, workstations, PCs, laptop computers, personal digital assistants (PDAs), Internet appliances, handheld devices, cellular telephones, smart phones, wireless devices, other devices, and the like, capable of performing the processes of the exemplary embodiments. The devices and subsystems of the exemplary embodiments can communicate with each other using any suitable protocol and can be implemented using one or more programmed computer systems or devices.

One or more interface mechanisms can be used with the exemplary embodiments, including, for example, Internet access, telecommunications in any suitable form (e.g., voice, modem, and the like), wireless communications media, and the like. For example, employed communications networks or links can include one or more wireless communications networks, cellular communications networks, 3G communications networks, Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware and/or software art(s). For example, the functionality of one or more of the components of the exemplary embodiments can be implemented via one or more hardware and/or software devices.

The exemplary embodiments can store information relating to various processes described herein. This information can be stored in one or more memories, such as a hard disk, optical disk, magnetooptical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

Stored on any one or on a combination of computer readable media, the exemplary embodiments of the present inventions can include software for controlling the components of the exemplary embodiments, for driving the components of the exemplary embodiments, for enabling the components of the exemplary embodiments to interact with a human user, and the like. Such software can include, but is not limited to, device drivers, firmware, operating systems, development tools, applications software, and the like. Such computer readable media further can include the computer program product of an embodiment of the present inventions for performing all or a portion (if processing is distributed) of the processing performed in implementing the inventions. Computer code devices of the exemplary embodiments of the present inventions can include any suitable interpretable or executable code mechanism, including but not limited to scripts, interpretable programs, dynamic link libraries (DLLs), Java classes and applets, complete executable programs, Common Object Request Broker Architecture (CORBA) objects, and the like. Moreover, parts of the processing of the exemplary embodiments of the present inventions can be distributed for better performance, reliability, cost, and the like.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computerreadable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

## Claims

1. A method of triggering a packet data transfer to a mobile terminal device with a voice call, the method comprising:
detecting (100) an incoming voice call at a mobile telephony enabled mobile terminal device; and
determining (110) a calling subscriber identification of said detected incoming voice call;
**characterized in that** the method further comprises:
searching (120) for said determined calling subscriber identification from among one or more subscriber identifications allowed to trigger a packet data transfer to said mobile terminal device and pre-stored in a universal integrated circuit card arranged in connection with said mobile terminal device; and
in response to finding (130) said determined calling subscriber identification among said one or more pre-stored subscriber identifications:
initiating (160) a wireless packet data connection from said mobile terminal device to a predetermined packet data network address; and
retrieving (170) packet data associated with said predetermined packet data network address to said mobile terminal device via said initiated wireless packet data connection.

2. The method according to claim 1, **characterized in that** the method further comprises:
discarding (150) said detected incoming voice call in response to finding (130) said determined calling subscriber identification among said one or more pre-stored subscriber identifications.

3. The method according to claim 2, **characterized in that** said discarding (150) said detected incoming voice call comprises automatically hanging up said voice call without answering or ringing.

4. The method according to any of the claims 1 - 3, **characterized in that** said detecting (100) said incoming voice call comprises detecting an incoming voice call originating from a network server.

5. The method according to any of the claims 1 - 4, **characterized in that** said initiating (160) said wireless packet data connection from said mobile terminal device to said predetermined packet data network address comprises initiating said wireless packet data connection to a predetermined packet data network address associated with said determined calling subscriber identification.

6. A mobile terminal device, the mobile terminal device (200) being mobile telephony enabled and comprising:
a voice call detector (201) configured to detect an incoming voice call; and
a calling subscriber identification determination unit (202) configured to determine a calling subscriber identification of said detected incoming voice call;
**characterized in that** the mobile terminal device (200) further comprises:
a subscriber identification storage (203) configured to store one or more subscriber identifications allowed to trigger a packet data transfer to said mobile terminal device, said subscriber identification storage (203) comprised in a universal integrated circuit card (208) arranged in connection with said mobile terminal device (200);
a calling subscriber identification search unit (204) configured to search for said determined calling subscriber identification at said subscriber identification storage (203) comprised in said universal integrated circuit card (208);
a packet data transfer initiator (206) configured to initiate a wireless packet data connection to a predetermined packet data network address in response to said determined calling subscriber identification being found in said subscriber identification storage (203); and
a packet data retriever (207) configured to retrieve packet data (211) associated with said predetermined packet data network address via said initiated wireless packet data connection.

7. The mobile terminal device according to claim 6, **characterized in that** the mobile terminal device (200) further comprises:
a voice call discard unit (205) configured to discard said detected incoming voice call in response to said determined calling subscriber identification being found in said subscriber identification storage (203).

8. The mobile terminal device according to claim 7, **characterized in that** said voice call discard unit (205) is further configured to perform said discarding said detected incoming voice call by automatically hanging up said voice call without answering or ringing.

9. The mobile terminal device according to any of the claims 6 - 8, **characterized in that** said incoming voice call detected by said voice call detector (201) comprises an incoming voice call originating from a network server (210).

10. The mobile terminal device according to any of the claims 6 - 9, **characterized in that** said predetermined packet data network address to which said packet data transfer initiator (206) is configured to initiate said wireless packet data connection comprises a predetermined packet data network address associated with said determined calling subscriber identification.

11. A computer program for triggering a packet data transfer to a mobile terminal device with a voice call, the computer program comprising instructions which, when run in a mobile telephony enabled mobile terminal device, cause the mobile terminal device to perform the steps of:
detecting (100) an incoming voice call at a mobile telephony enabled mobile terminal device; and
determining (110) a calling subscriber identification of said detected incoming voice call;
**characterized in that** the instructions further cause the mobile terminal device to perform the steps of:
searching (120) for said determined calling subscriber identification from among one or more subscriber identifications allowed to trigger a packet data transfer to said mobile terminal device and pre-stored in a universal integrated circuit card arranged in connection with said mobile terminal device; and
in response to finding (130) said determined calling subscriber identification among said one or more pre-stored subscriber identifications:
initiating (160) a wireless packet data connection from said mobile terminal device to a predetermined packet data network address; and
retrieving (170) packet data associated with said predetermined packet data network address to said mobile terminal device via said initiated wireless packet data connection.

## Patentansprüche

1. Ein Verfahren zum Auslösen einer Paketdatenübertragung zu einem mobilen Endgerät mit einem Sprachanruf, wobei das Verfahren umfasst:
Erfassen (100) eines eingehenden Anrufs bei einem Mobilfunk-fähigen mobilen Endgerät; und
Bestimmen (110) einer Identifizierung eines anrufenden Teilnehmers des erfassten eingehenden Sprachanrufs;
**dadurch gekennzeichnet, dass** das Verfahren ferner umfasst:
Suchen (120) der bestimmten Identifizierung eines anrufenden Teilnehmers aus einer oder mehreren Teilnehmeridentifizierungen, denen erlaubt ist eine Paketdatenübertragung an das mobile Endgerät auszulösen, und die vorgespeichert sind in einer universellen integrierten Schaltkreiskarte, die angeordnet ist in Verbindung mit dem mobilen Endgerät; und
in Reaktion auf ein Auffinden (130) der bestimmten Identifizierung eines anrufenden Teilnehmers unter den einen oder mehreren vorgespeicherten Teilnehmeridentifizierungen:
Initiieren (160) einer drahtlosen Paketdatenverbindung von dem mobilen Endgerät zu einer vorbestimmten Paketdatennetzwerkadresse; und
Abrufen (170) von Paketdaten, die mit der vorbestimmten Paketdatennetzwerkadresse assoziiert sind, zu dem mobilen Endgerät über die initiierte drahtlose Paketdatenverbindung.

2. Das Verfahren nach Anspruch 1, **dadurch gekennzeichnet, dass** das Verfahren ferner umfasst:
Verwerfen (150) des erfassten ankommenden Sprachanrufs in Reaktion auf das Auffinden (130) der bestimmten Identifizierung eines anrufenden Teilnehmers unter den einen oder mehreren vorgespeicherten Teilnehmeridentifizierungen.

3. Das Verfahren nach Anspruch 2, **dadurch gekennzeichnet, dass** das Verwerfen (150) des erfassten ankommenden Sprachanrufs ein automatisches Auflegen des Sprachanrufs ohne zu antworten oder zu klingeln umfasst.

4. Das Verfahren nach einem der Ansprüche 1 bis 3, **dadurch gekennzeichnet, dass** das Erfassen (100) des ankommenden Sprachanrufs ein Erfassen eines eingehenden Sprachanrufs ausgehend von einem Netzwerk-Server umfasst.

5. Das Verfahren nach einem der Ansprüche 1 bis 4, **dadurch gekennzeichnet, dass** das Initiieren (160) der drahtlosen Paketdatenverbindung von dem mobilen Endgerät an die vorbestimmte Paketdatennetzwerkadresse ein Initiieren der drahtlosen Paketdatenverbindung mit einer vorbestimmten Paketdatennetzwerkadresse, die mit der bestimmten Identifizierung eines anrufenden Teilnehmers assoziiert ist, umfasst.

6. Ein mobiles Endgerät, das mobile Endgerät (200), welches Mobiltelefonie aktiviert ist und umfasst:
ein Sprachanruf-Detektor (201), der konfiguriert ist, einen eingehenden Anruf zu erkennen; und
eine Identifizierung eines anrufenden Teilnehmers-Ermittlungseinheit (202), die konfiguriert ist, eine Identifizierung eines anrufenden Teilnehmers des erkannten eingehenden Sprachanrufs zu bestimmen;
**dadurch gekennzeichnet, dass** das mobile Endgerät (200) ferner aufweist:
einen Teilnehmeridentifizierungsspeicher (203), der konfiguriert ist, eine oder mehrere Teilnehmeridentifizierungen, denen erlaubt ist eine Paketdatenübertragung an das mobile Endgerät auszulösen, zu speichern, wobei der Teilnehmeridentifizierungsspeicher (203) in einer universellen integrierten Schaltungskarte (208) umfasst ist, angeordnet in Verbindung mit dem mobile Endgerät (200);
eine Identifizierung eines anrufenden Teilnehmers-Sucheinheit (204), die konfiguriert ist, um die bestimmte Identifizierung eines anrufenden Teilnehmers im Teilnehmeridentifizierungsspeicher (203), der in der universellen integrierten Schaltungskarte (208) umfasst ist, zu suchen;
ein Paketdatenübertragungsinitiator (206), der konfiguriert ist, eine drahtlose Paketdatenverbindung zu einer vorbestimmten Paketdatennetzwerkadresse in Antwort auf ein Auffinden der bestimmten Identifizierung eines anrufenden Teilnehmers in dem Teilnehmeridentifizierungsspeicher (203), zu initiieren; und
ein Paketdaten-Abrufer (207), der konfiguriert ist Paketdaten (211), die assoziiert sind mit der vorbestimmten Paketdatennetzwerkadresse, über die initiierte drahtlose Paketdatenverbindung abzurufen.

7. Das mobile Endgerät nach Anspruch 6, **dadurch gekennzeichnet, dass** das mobile Endgerät (200) ferner umfasst:
eine Sprachanrufverwerfeinheit (205), die konfiguriert ist den erkannten eingehenden Sprachanruf in Reaktion der bestimmten Identifizierung eines anrufenden Teilnehmers in dem Teilnehmeridentifizierungsspeicher (203) zu verwerfen.

8. Das mobile Endgerät nach Anspruch 7, **gekennzeichnet dadurch, dass** die Sprachanrufverwerfeinheit (205) weiter konfiguriert ist, das genannte Verwerfen des erkannten eingehenden Sprachanrufs durch automatisches Auflegen ohne zu antworten oder zu klingeln auszuführen.

9. Das mobile Endgerät nach einem der Ansprüche 6 bis 8, **dadurch gekennzeichnet, dass** der eingehende Sprachanruf, der durch den Sprachanruf-Detektor (201) erfasst wird, einen eingehenden Sprachanruf ausgehend von einem Netzwerkserver (210) umfasst.

10. Das mobile Endgerät nach einem der Ansprüche 6 bis 9, **dadurch gekennzeichnet, dass** die vorbestimmte Paketdatennetzwerkadresse, zu der der Paketdatenübertragungsinitiator (206) so konfiguriert ist, die drahtlose Paketdatenverbindung zu initiieren, eine vorbestimmte Paketdatennetzwerkadresse umfasst, die assoziiert ist mit der bestimmten Identifikation eines anrufenden Teilnehmers.

11. Ein Computerprogramm zum Auslösen einer Paketdatenübertragung zu einem mobilen Endgerät mit einem Sprachanruf, wobei das Computerprogramm Instruktionen umfasst, die, wenn sie in einem Mobiltelefonie-fähigen mobilen Endgerät ausgeführt werden, auslösen, dass das mobile Endgerät die Schritte ausführt:
Erfassen (100) eines eingehenden Anrufs bei einem Mobilfunk-fähigen mobilen Endgerät; und
Bestimmen (110) einer Identifizierung eines anrufenden Teilnehmers des erfassten eingehenden Sprachanrufs;
**dadurch gekennzeichnet, dass** die Instruktionen ferner auslösen, dass das mobile Endgerät die Schritte ausführt:
Suchen (120) der bestimmten Identifizierung eines anrufenden Teilnehmers aus einer oder mehreren Teilnehmeridentifizierungen, denen erlaubt ist eine Paketdatenübertragung an das mobile Endgerät auszulösen, und die vorgespeichert sind in einer universellen integrierten Schaltkreiskarte, die angeordnet ist in Verbindung mit dem mobilen Endgerät; und
in Reaktion auf ein Auffinden (130) der bestimmten Identifizierung eines anrufenden Teilnehmers unter den einen oder mehreren vorgespeicherten Teilnehmeridentifizierungen:
Initiieren (160) einer drahtlosen Paketdatenverbindung von dem mobilen Endgerät zu einer vorbestimmten Paketdatennetzwerkadresse; und
Abrufen (170) von Paketdaten, die mit der vorbestimmten Paketdatennetzwerkadresse assoziiert sind, zu dem mobilen Endgerät über die initiierte drahtlose Paketdatenverbindung.

## Revendications

1. Procédé de déclenchement d'une transmission de données par paquets à un dispositif de terminal mobile avec un appel vocal, le procédé comprenant :
la détection (100) d'un appel vocal entrant sur un dispositif de terminal mobile adapté à la téléphonie mobile, et
la détermination (110) d'une identification d'abonné appelant dudit appel vocal entrant,
**caractérisé en ce que** le procédé comprend en outre :
la recherche (120) de ladite identification d'abonné appelant déterminée parmi une ou plusieurs identifications d'abonné autorisées à déclencher une transmission de données par paquets audit dispositif de terminal mobile et préenregistrées dans une carte de circuit intégré universelle agencée de façon connectée audit dispositif de terminal mobile, et
en réponse au fait d'avoir trouvé (130) ladite identification d'abonné appelant parmi lesdites une ou plusieurs identifications d'abonné préenregistrées :
l'initiation (160) d'une connexion de données par paquets sans fil depuis ledit dispositif de terminal mobile à une adresse de réseau de données par paquets, et
la récupération (170) de données par paquets associées à ladite adresse de réseau de données par paquets prédéterminée sur ledit dispositif de terminal mobile via ladite connexion de données par paquets sans fil initiée.

2. Procédé suivant la revendication 1, **caractérisé en ce que** le procédé comprend en outre :
le rejet (150) dudit appel vocal entrant détecté en réponse au fait d'avoir trouvé (130) ladite identification d'abonné appelant parmi lesdites une ou plusieurs identifications d'abonné préenregistrées.

3. Procédé suivant la revendication 2, **caractérisé en ce que** ledit rejet (150) dudit appel vocal entrant détecté comprend automatiquement le raccrochement dudit appel vocal sans prise d'appel ou sonnerie.

4. Procédé suivant une quelconque des revendications 1 à 3, **caractérisé en ce que** ladite détection (100) dudit appel vocal entrant comprend la détection d'un appel vocal entrant d'un serveur de réseau.

5. Procédé suivant une quelconque des revendications 1 à 4, **caractérisé en ce que** ladite initiation (160) de ladite connexion de données par paquets sans fil depuis ledit dispositif de terminal mobile à ladite adresse de réseau de données par paquets prédéterminée comprend l'initiation de ladite connexion de données par paquets sans fil à une adresse de réseau de données par paquets prédéterminée associée à ladite identification d'abonné appelant déterminée.

6. Dispositif de terminal mobile, le dispositif de terminal mobile (200) étant adapté à la téléphonie mobile et comprenant :
un détecteur d'appel vocal (201) configuré pour détecter un appel vocal entrant, et
une unité de détermination d'identification d'abonné appelant (202) configurée pour déterminer une identification d'abonné appelant dudit appel vocal entrant
**caractérisé en ce que** le dispositif de terminal mobile (200) comprend en outre :
une mémoire d'identifications d'abonné (203) configurée pour stocker une ou plusieurs identifications d'abonné autorisées à déclencher une transmission de données par paquets audit dispositif de terminal mobile, ladite mémoire d'identifications d'abonné (203) étant comprise dans une carte de circuit intégré universelle (208) agencée de façon connectée audit dispositif de terminal mobile (200),
une unité de recherche d'identification d'abonné appelant (204) configurée pour rechercher ladite identification d'abonné appelant déterminée dans ladite mémoire d'identifications d'abonné (203) comprise dans ladite carte de circuit intégré universelle (208),
un initiateur de transmission de données par paquets (206) configuré pour initier une connexion de données par paquets sans fil à une adresse de réseau de données par paquets prédéterminée en réponse au fait que ladite identification d'abonné appelant déterminée a été trouvée dans ladite mémoire d'identifications d'abonné (203), et
un récupérateur de données par paquets (207) configuré pour récupérer des données par paquets (211) associées à ladite adresse de réseau de données par paquets prédéterminée via ladite connexion de données par paquets sans fil initiée.

7. Dispositif de terminal mobile suivant la revendication 6, **caractérisé en ce que** le dispositif de terminal mobile (200) comprend en outre :
une unité de rejet d'appel vocal (205) configurée pour rejeter ledit appel vocal entrant détecté en réponse au fait que ladite identification d'abonné appelant déterminée a été trouvée dans ladite mémoire d'identification d'abonné (203).

8. Dispositif de terminal mobile suivant la revendication 7, **caractérisé en ce que** ladite unité de rejet d'appel vocal (205) est en outre configurée pour procéder audit rejet d'appel vocal entrant détecté en raccrochant automatiquement ledit appel vocal sans prise d'appel ou sonnerie.

9. Dispositif de terminal mobile suivant une quelconque des revendications 6 à 8, **caractérisé en ce que** ledit appel vocal entrant détecté par ledit détecteur d'appel vocal (201) comprend un appel vocal entrant provenant d'un serveur de réseau (210).

10. Dispositif de terminal mobile suivant une quelconque des revendications 6 à 9, **caractérisé en ce que** ladite adresse de réseau de données par paquets prédéterminée, à laquelle ladite connexion de données par paquets sans fil est initiée par ledit initiateur de transmission de données par paquets (206) configuré à cet effet, comprend une adresse de réseau de données par paquets prédéterminée associée à ladite identification d'abonné appelant déterminée.

11. Programme d'ordinateur destiné à déclencher une transmission de données par paquets à un dispositif de terminal mobile avec un appel vocal, le programme d'ordinateur comprenant des instructions qui, lorsqu'elles sont exécutées dans un dispositif de terminal mobile adapté à la téléphonie mobile, font exécuter par le dispositif de terminal mobile les étapes suivantes qui consistent à :
détecter (100) un appel vocal entrant sur un dispositif de terminal mobile adapté à la téléphonie mobile, et
déterminer (110) une identification d'abonné appelant dudit appel vocal entrant détecté,
**caractérisé en ce que** les instructions font exécuter, en plus, par le dispositif de terminal mobile les étapes suivantes qui consistent à :
rechercher (120) ladite identification d'abonné appelant déterminée parmi une ou plusieurs identifications d'abonné appelant autorisées à déclencher une transmission de données par paquets audit dispositif de terminal mobile et préenregistrées dans une carte de circuit intégré universelle agencée de façon connectée audit dispositif de terminal mobile, et
en réponse au fait d'avoir trouvé (130) ladite identification d'abonné appelant déterminée parmi lesdites une ou plusieurs identifications d'abonné préenregistrées :
initier (160) une connexion de données par paquets sans fil depuis ledit dispositif de terminal mobile à une adresse de réseau de données par paquets, et
récupérer (170) des données par paquets associées à ladite adresse de réseau de données par paquets prédéterminée sur ledit dispositif de terminal mobile via ladite connexion de données par paquets sans fil initiée.
